# EUROPEAN PATENT APPLICATION

(11) **EP 1 780 710 A1**
(43) Date of publication of application: **02.05.2007**
(21) Application number: 05760640.2
(22) Date of filing: 17.06.2005
(51) Int. Cl.: G11B 20/12

(54) **METHOD FOR RECORDING, REPRODUCING AND HANDLING AUDIO DATA IN A DATA RECORDING MEDIUM**

(30) Priority: 02.07.2004 ES 200401614
(71) Applicant: Rivas Quesada, Fabio A., 28022 Madrid (ES); Mayo Sanz, Pablo, 28022 Madrid (ES)
(72) Inventor: RIVAS QUESADA, Fabio A., E-28022 MADRID (ES); MAYO SANZ, Pablo, E-28022 MADRID (ES); SOBREVILLA FERNANDEZ, Rafael, E-28850 TORREJON DE ARDOZ (Madrid) (ES)
(74) Representative: Carpintero Lopez, Francisco
(86) International application number: PCT/ES2005/000341
(87) International publication number: WO 2006/013221

(57) **Abstract**

The invention relates to a method for the recording of an audio signal constituted by multiple tracks and one or more channels, in a digital data format on a single track of a recording support of digital information; as well as to a method for the reproduction of such a format which also allows the manipulation of the plurality of tracks which form the audio signal recorded in such a format on a single track of said recording support.

A field of application is in the professional audio sector, for the disk jockeys (DJs) engaged in the mixing of songs in dance halls and discotheques, facilitating and making the performances of these professionals more creative, through the invention allowing them to manipulate simultaneously different digital tracks of instruments and/or vocals of a song independently and in real time. It is also applicable in the domestic audio environment (karaoke, etc.).

## Description

### OBJECT OF THE INVENTION

The present invention falls within the sector of digital technologies, in particular, on the processing of audio signals and, more particularly, finds its field of application in the music industry.

The invention disclosed herein relates to a method of the recording of an audio signal constituted by multiple tracks and one or more channels, in a digital data format on a single track of a digital information recording support; as well as to a method of the reproduction of said format which also allows the manipulation of the plurality of tracks that form the audio signal recorded in such a format on a single track of the digital information recording support.

The object of the invention is to provide an audio format, which can be recorded on a data support which contains information of audio tracks, built from the plurality of samples that form the tracks recorded in a conventional audio digital format, multi-channel or not, with or without quality impairment, such that it can be reproduced in real time without losing quality and with the original channels of the tracks, so that said channels and tracks can also be manipulated independently.

The invention herein proposed is applicable to the professional audio industry and particularly to both the recording industry sector and that of disk jockeys (DJs), although it can also be applied in the domestic environment of the audio industry sector.

### BACKGROUND OF THE INVENTION

Sounds are heard due to vibrations which are produced in the medium in which we are situated, usually air. Several methods exist to be able to have this vibration recorded and be able to reproduce the sound in question. The most basic method is by means of an electric wave which represents those vibrations. Inside a microphone those vibrations move a membrane and are transformed into an electric signal, whilst to reproduce them, the process is reversed, by means of a signal, a membrane is moved which in turn makes the air vibrate and it is possible thereby to hear the sound (loudspeaker).

To store that sound (a wave) a microgroove can be recorded whose irregularities reproduce the wave which is then read by a needle (vinyl disks) or by means of magnetic particles that are oriented in certain directions. This system is that utilized in tapes. These forms of storing the sound are termed analogue, that is to say the sound wave is stored by means of another wave.

With the development of information technology another form of storing the sound was conceived which consists of transforming the values of that wave into numeric values (0 and 1) which can be stored in a computer. The audio signal saved this way is known as digital audio.

To digitise this sound, points must be taken on the wave and the value of the wave noted at that instant. Whilst a wave can adopt an infinite number of values and is continuous in time, a coding process produces discrete values, that is it can only take one value from among a closed number of possible values and each value is maintained for an interval of time, it is not continuous.
The quality of this sound will depend on several factors, the main ones being:
■ Sampling rate: it indicates how many samples are taken; the greater this value the more truly the digital audio will reflect the original. It is measured in Hertz (Hz), hertz are not a unit, they indicate one cycle of an event per second. That is, a rate of 1000 Hz means that during each second, 1000 values are taken. According to Nyquist's theorem, the minimum sampling rate has to be 2 times the maximum frequency of the sound that it is desired to be sampled.
■ Word length: it is equal to as many values as there are available. The values are stored in binary format (zeros and ones). That is, if a length of 8 bits is given, each sample will always have a combination of eight zeros and ones. To know in the decimal system how many combinations there are, it is only necessary to raise two (number of possible digits) to the word length: 2⁸ =256.
■ Number of channels: this indicates how many different sounds we have. If there is only one sound track a monaural (or mono) sound will be heard. That is, although it is reproduced in a pair of loudspeakers, the same sound will be heard through both. The following step would be stereophonic sound or stereo, in which there are two different channels, which allows certain effects to be recreated and provide the sound with a greater spatial sensation.
■ Compression level: in order to be able to store more audio in less space, the digital information can be subjected to compression, this can be with losses (lossy) or without loss (lossless).

In the computer the method (and the algorithm) to digitise and compress this information and to then reproduce it, is termed codec (coding-decoding).

At the present time there are a multitude of digital audio formats, with different applications. Among them, we can highlight three types:
1.- PCM formats without quality impairment
2.- Audio compression formats with quality impairment
3.- Audio multi-channel formats for video and games.

Among the PCM formats without quality impairment, two classes are distinguished:
1.a.- CD-audio: A Pulse Code Modulation (PCM) coding is carried out, the characteristics of which are 44.1 kHz sampling rate, 16 bits and stereo.
1.b.- Wav and Aiff: audio formats developed respectively by Microsoft® and Apple®; this is a form of storing the sound, it being possible to encode them by means of different codecs.

Regarding audio compression formats with quality impairment, two similar types are known:
2.a.- MP3 and Atrac: they are compression methods which suppress frequencies that are not audible and by means of a series of algorithms they are capable of achieving sound that occupies much less storage room, although quality is lost. MP3 is the most widespread format for the exchange of songs on Internet and its name does not signify MPEG 3 (this standard does not exist), but instead it is MPEG 1 - layer 3, and originally it was the audio specification conceived for video on MPEG1. Atrac is a compression format of Sony® (used in its digital recorders and minidiscs) similar in concept to MP3.

And as an audio multi-channel format for spatial positioning, there is multi-channel sound, EAX® being one of the most widespread formats in PCs, developed by Soundblaster® mainly for games. It usually consists of four channels (left front, right front, left rear and right rear). Multi-channel audio can also be obtained by making use of the DirectX® and DirectSound® libraries of Microsoft®.

Until the appearance of the DVD, the most advanced audio system that one could enjoy at home was stereo (either through stereo broadcasting or VHS stereo). This consists of two different audio channels (left and right). However, the creation of a surround sound sensation with just two channels is very poor, although some companies launched virtual surround sound systems.

The first attempt at achieving multi-channel sound in a cinema was the Dolby Surround Prologic®. It consists of four channels (left, central, right and surround or rear) encoded in the normal stereo signal, this means that a processor which receives a stereo signal with these characteristics and has surround-sound loudspeakers, is really able to create the surround sound in question. These processors have developed and are able to emulate a surround sound from a normal stereo source, particularly the recently arrived Dolby Prologic II®. It is an analogue signal; the fact that the signal is Dolby Prologic® does not affect its reproduction in stereo mode in any unit that does not process Dolby Prologic®.

Dolby Digital® arose later and is now really a multi-channel digital audio system, at present it is the standard and the reference in home cinema. It is based on five independent audio channels and one more for low frequencies (the .1) or LFE, used by the subwoofer. It was made this way so that when acquiring a set of loudspeakers the user did not have to buy five loudspeakers capable of acceptably reproducing the lowest frequencies, since it is they that need larger cones and boxes of a better quality.

There are several Dolby Digital® codes: 2/0: normal stereo; 2/2: right, left, left rear and right rear; 3/2: to those preceding a central front channel is added. This configuration of loudspeakers is known as 5.1. In films the most usual situation is that the dialogues are heard through the front loudspeaker, the music through the right and left front units, and the sound effects through any of the five, in music DVDs it is possible to choose between locating the spectator in the audience (music in the front three units and the ambient sound of the audience in the rear ones) or in the middle of the band, directing each instrument to a channel. This distribution is not very closed, since the music can be surround, a dialogue can be heard that is out of the picture through the rear loudspeakers, etc.

In spite of the wide variety of digital audio formats that exist today, to date none are known that allow manipulation simultaneously and in real time of the different tracks as well as the different channels which form an audio signal recorded on a digital recording support (memory or hard disk, optical disk, digital tape, etc.) in a single data file according to a single format.

At the moment formats and systems are known that reproduce those known formats, which allow the manipulation of the different tracks or the channels of an audio signal but recorded separately on different tracks of the digital recording physical support (CD, DVD, etc.); that is, each track is in a data file which the specific format constitutes, there being several data files in that specific format for each of the tracks on which the audio signal is separately recorded.

There are also systems, like the sound post-production or composition programmes that are presently on the music market which can reproduce and manipulate simultaneously both the tracks separately and the mix recorded in a given format, but which need to have the different music tracks recorded in different files so that the reproduction of their mix is possible in real time.

### DESCRIPTION OF THE INVENTION

In order to resolve the problems outlined above, the invention disclosed herein is based on the creation of a digital audio format which allows the combined recording of all the tracks and the channels that form an audio signal, resulting in a single data file, which can be recorded by means of the method object of the invention on a physical support for digital recording (magnetic disk: hard disk of a computer, etc., memory cards, optical disk: CD, DVD, etc., or digital tape: DAT, DV, etc. and any support for the recording of data that may be implemented in the future).

One aspect of the invention is a method which records audio data which correspond generally to a multi-track and multi-channel digital audio signal, formed by several spatial positioning channels and audio tracks. In said recording method, a digital data structure is produced which defines said digital audio format and which contains the information of all the audio tracks combined, but not mixed, together with that of the channels which form the audio signal, according to said unique format which is recorded physically on a single track of a digital recording support.

Another aspect of the invention is a method which also reproduces the digital audio format obtained by the previous procedure, which also allows manipulation in real time of each one of the tracks and channels which originally form the audio signal which is reproduced in mixed form.

A final aspect of the invention is to provide a system which allows the recording of a multi-track and multi-channel audio signal on a digital information recording support in the format generated by said recording method, as well as the reproduction of said format and manipulation of the multi-track and multi-channel audio signal by means of said reproduction and manipulation method.

The audio digital format on which the invention is based, recorded in a unique data file, does not contain the mix of the tracks that form the audio signal, but each of the tracks individually and all contained in a combined manner in a single format.

Thus, since the data input to the method of the invention, for the recording of a digital audio signal, is constituted by the different data files on which the different tracks of the audio signal have been recorded previously and separately in a conventional digital audio format (PCM, WAV, AIFF, MP3, ATRAC, EAX, DOLBY SURROUND, PROLOGIC, DIGITAL, etc.) and common to all the recorded tracks, the output produced is in a single data file in accordance with another unique format.

At the input, the different audio tracks are recorded on different tracks of a physical support for digital information (memory cards, disk: HD, CD, DVD, etc., or tape: DAT, DV, etc.), while the output is recorded by means of the recording method disclosed on a single track of the same or another physical support for digital information.

Although said unique format has the tracks combined but not mixed, the method of the invention is also capable of reproducing the mix which constitutes the original audio signal and the different tracks or the different channels separately, allowing the manipulation thereof in real time.

The input of said method of reproduction and manipulation is the multi-track and multi-channel audio signal recorded in the unique audio digital format proposed, on a physical data recording support, from the content of which it is able to separate the tracks and the channels to reproduce them and to manipulate them in a simultaneous manner in real time.

The method of the recording of audio data on a data support, said audio data being formed by at least one audio track recorded in different data files in a common and known digital audio format and said tracks being incorporated by a maximum number of multiple samples of also known size, has the object of allowing the reproduction and/or manipulation independently, in real time and without quality impairment of each of the audio tracks.

The method of recording object of the invention is characterized in that it comprises recording a data field which consists of a structure of digitised information formed by the same number of data blocks as the maximum number of samples existing and arranged following the numbering of said samples. Each of the data blocks is formed by the grouping of all the samples, which correspond to the same order number for each of the tracks.

In order to save volume of information, when recording said data field, the samples corresponding to silences are not written on the data support.

To make this saving possible, when recording the data field formed by the aforementioned data blocks, the recording of a block header is included before each of said data blocks, this header identifies which tracks contain samples corresponding to silences and which do not.

In particular, the block header is a bit field with a fixed length equal to the number of tracks, each bit corresponding to a track and indicating with a "1" that the sample for that track contains sound while a "0" indicates that the sample of that track is a silence (sample with null value).

Thus, the data field that is recorded on the data support by the method of the invention is configured as "header-samples / header-samples /header-samples / ...". During the recording of the audio data by said method, the samples with null value are not reflected in the data blocks, but in the block headers instead, thus saving size in the total file.

Separately, in front of the complete data field, a format header is recorded which contains information on the samples of each track. This information of the format header are data obtained from the known format headers in which the tracks are recorded, which include data like the sampling frequency, number of bits per sample and maximum duration in samples of the audio signal formed by said tracks, recorded in accordance with the values of such data according to the known format, as well as of the number of channels which form said audio signal.

Also, said format header can include information identifying the audio data introduced by the user. If the audio data correspond to a multi-track and multi-channel audio signal such as a song, the user can insert, by means of a graphic interface, the title of the song or the singer's name in some text fields which go as ASCII fields in the general header of the audio format according to which the method of the invention is recording.

Optionally, an extra data field can also be included between the general header and the data field, a data field which contains other information, such as synchronisation data intended to be used in the reproducing of more than one multi-track audio signal recorded according to the audio format object of the invention.

The purpose of the audio format object of the invention is to be able to listen to and manipulate each track recorded in a song independently. The track is understood to be the combination made by the music producer, of one or several instruments and/or voices. Each track can have in turn spatial positioning channels, for example, stereo (left and right channel).

At the present time, the most similar format may be Dolby Digital 5.1, which has a data frame, with independent channels. However, said format is designed so that during the reproduction, it is possible to have spatial positioning of different channels encapsulated in said format.

Therefore the novel contribution of the digital audio format object of the invention is that it contains in an independent manner the different sound channels which constitute a song, it being possible to incorporate in turn spatial positioning of each track.

The heart of this new format consists in the combination and encryption of the multiple tracks (in standard PCM format) that form part of any piece of music.

Basically, and as an example, in most songs TWO basic tracks can be distinguished which are, on one hand the VOICE, and on the other the MUSICAL INSTRUMENTS. Whereby, once the file has been produced that combines both tracks, and during the reproduction, it is possible to listen to one of them, to both, or any combination of volumes of the "q" tracks that constitute the file. Thus, the discrimination of any track does not affect the quality of the sound of any one of them, since the reproduction uses the original PCM format for each track in an independent manner; and does not use, for the generation of the new format, compression algorithms with quality impairment, equalisation, etc.

Another aspect of the invention is a multi-channel and multi-track audio system which uses the audio format and in which the method of the invention is implemented, which comprises:
□ Encoder: starting from the various PCM stereo tracks, the file is encoded and recorded in the digital audio format following the recording method described. This part would be in the hands of the music producer and the recording company.
□ Decoder: to reproduce the digital audio format recorded by means of the method of the invention, it being possible to listen to and manipulate the tracks separately. This part would be in the hands of the audio producers or of an end user that uses the mixing of sounds in the professional (disk jockeys, etc.) or domestic environment.

As inputs to the encoder system, there will be "q" audio files (for example, 4 audio tracks) which can represent different instruments, surroundings, sounds, voices, etc. with "m" channels (for example, stereo = 2 channels), of which the sampling frequency (for example, 44100 Hz), bits per sample (for example, 16 bits) and BPM (beats per minute) are identical. As output of the encoder (and input of the decoder/reproducer), there will be a single file, compressed (without quality impairment that is, with the same dynamic range as the original audio files) and encrypted.

This file can be recorded on any digital data support.

The decoder will be a device which will read the digital data support on which the file is recorded with the recording format, it will decode it (decrypt it, decompress it, mix it and reproduce it). Also it will have some physical system of control (for example, linear potentiometers) which will be able to regulate, in a continuous mode, the volume of each stereo audio track (from 0 dB to -∞.). These tracks will be mixed by the device and the output will be the mix of the "q" tracks, modulated in amplitude according to the position of the device controls, having "m" physical audio outputs, where "m" is the number of channels of the format.

A possible field of application could be found in the professional audio sector. At the present time, the recording companies produce disks directed at the professionals engaged in the mixing of songs in dancehalls and discotheques by disk jockeys (DJ's), to facilitate and to make the acts of these professionals more creative, in such a way that each session is different to the preceding one.

At the present time a DJ, when creating the mix, has only the possibility of equalizing and suppressing, with quality impairment of the audio, some small portions of the song. That is, it is not possible to eliminate the base or any instrument in particular from a song, so that the mix with the following one is perfect; limiting to a great extent the creativity and possibilities of these professionals.

This invention arises with the purpose of breaking down these barriers and opening up a new field in the mixing of songs.

By means of the encoder, the recording company and/or producers would be capable, based on the master mixes, of publishing disks with this new format, on any digital data support (for example, CD, DVD, etc.).

This new format would be possible to market via the habitual sales channels of the existing formats.

Moreover, the DJ should have a decoder (reproducer of the digital supports on which the recording companies publish the new format), with as many physical volume controls, as there are tracks in said format. Thus, a DJ could have 1,2,3,... reproducers of the format to be mixed, for example, track 1 of reproducer 1, with track 3 of reproducer 2, and tracks 1, 2 and 4 of reproducer 3, all this synchronized in beats per minute (BPM), creating new, novel and creative sessions from the basic songs published.

Other fields of application at domestic audio level could be:
□ Karaoke (the voice is suppressed and the instruments remaining from the original song are left)
□ Opera (listening only to the singers or the music)
□ Pop/Rock (possibility of suppressing an instrument, and that the user accompanies the original song, playing that instrument or another).

In brief, this new Pro DJ system offers new possibilities, both creative and commercial, to the audio sector, both professional and domestic.

### DESCRIPTION OF THE DRAWINGS

To complete the description that is being made and with the object of assisting in a better understanding of the characteristics of the invention, in accordance with a preferred example of practical embodiment thereof, the same is accompanied, as an integral part of said description, with a set of drawings wherein by way of illustration and not restrictively, the following has been represented:

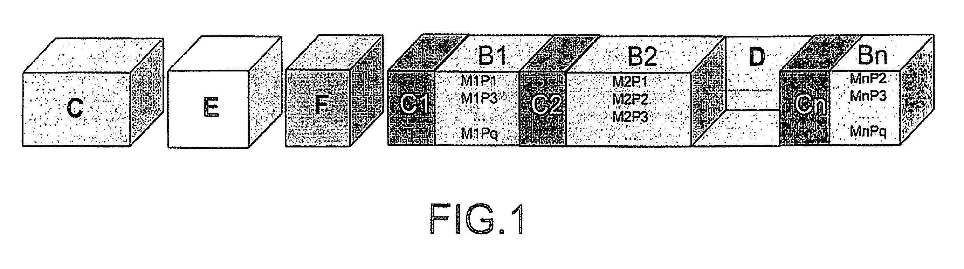

Figure 1. - It shows the structure in header, data and data block fields which form the digital audio format object of the invention.
Figure 2. - It shows the header fields of the PCM audio format.
Figure 3. - It shows the general header fields of the audio format which the method of the invention records.
Figure 4. - It shows the extra data fields of the audio format which the method of the invention records.
Figure 5. - It shows the format header fields of the audio format which the method of the invention records.
Figures 6A and 6B. - They show the data field, formed by block headers and data blocks, of the audio format which the method of the invention records.

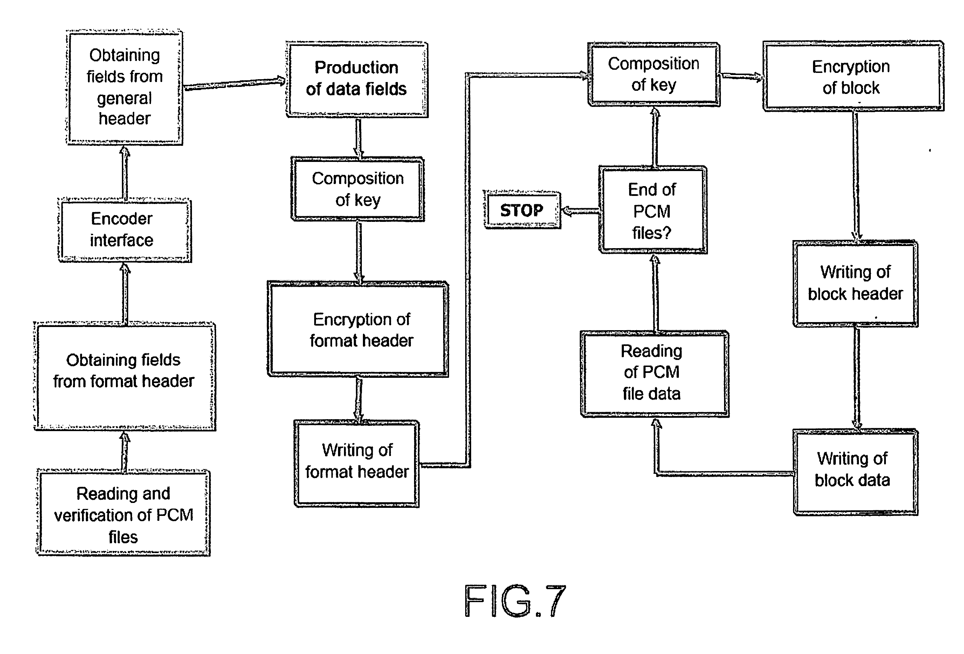

Figure 7. - It shows the block diagram of the system encoder.

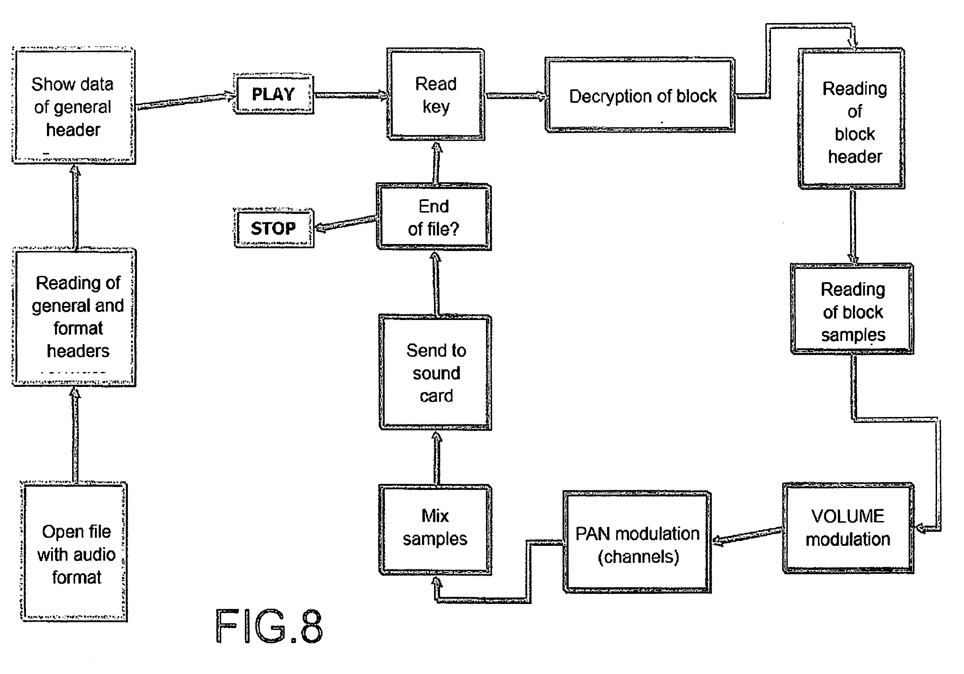

Figure 8. - It shows the block diagram of the system decoder.

### PREFERRED EMBODIMENT OF THE INVENTION

In the light of the aforementioned figures a method can be described as one of the possible embodiments of the invention for the recording of audio data on a data support, said audio data being formed by at least one audio track (P1-Pq) in a known format and said tracks being incorporated by a maximum number (n) of samples (M1-Mn) of known size, which has the object of allowing the reproduction and/or manipulation from said data support, in real time, without quality impairment and in an independent manner, of said audio tracks (P1-Pq) characterized in that it comprises recording a data field (D) which consists of a digitised information structure formed by data blocks (B1-Bn), as many in number as the maximum number (n) of samples and arranged following the numbering of said samples, and each one of the data blocks (B1-Bn) being formed by the grouping of all the samples (M1-Mn), which correspond to the same order number for each of the tracks (P1-Pq).

To optimise the volume of the data field (D) by reducing the size of the (n) data blocks which form it, in addition, the recording method includes recording a block header (C1-Cn) for each of the data blocks (B1-Bn), which consists of a digitised information structure, the length of which is fixed and equal to the number (q) of tracks, which contains information on whether the tracks have samples corresponding to a silence or not.

Thus, where "i" is a number from one to the total number of blocks, which is equal to the maximum number (n) of samples, i = 1 up to i = n, the block header Ci identifies with the bit number "j", where "j" is a number from one up to the total number (q) of tracks, j = 1 up to j = q, that the track Pj has its sample Mi with null value which corresponds to a silence if that bit is "0" or contains sound if the bit is "1". In this last case, the data block Bi contains the sample Mi of the track Pj; if not, no sample is recorded for said track Pj in the data block Bi.

In the reproducing of the tracks from the audio format recorded by the method described, the tracks identified with a bit "0" in the block header Ci are reproduced in the instant "i" with a null value of sample Mi inserted by the actual reproduction method when reproducing the tracks.

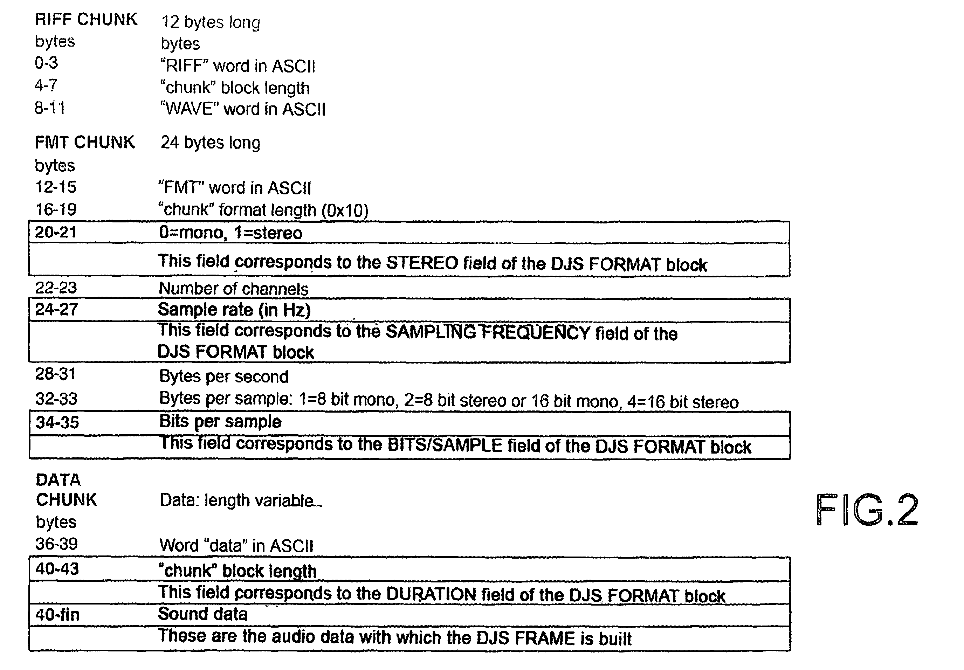

Prior to the data field (D), the recording method constructs a format header (F), which is unique to the digital audio format produced, based on the data included in the respective headers of the tracks recorded according to one of the audio formats already known, such as the PCM format, the header of which is shown in Figure 2.

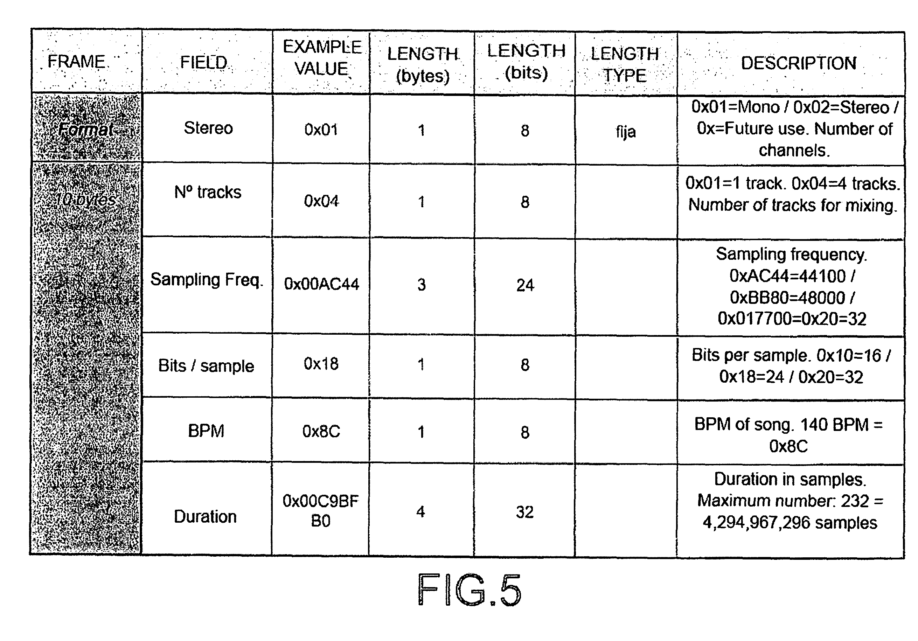

More particularly, the format header (F) contains information on the samples which form the audio tracks, the channels of spatial positioning that are present in said tracks and the reproducing speed for the mixing of the tracks. The data relative to this information are recorded in the fields which are shown in Figure 5 and they are described hereunder:
■ stereo field: number of channels of spatial positioning that the tracks have which form the digital audio signal to be recorded; it can be 0, equivalent to monaural, 1 to stereophonic, 4 to quadraphonic, etc.
■ number of tracks field: number of audio tracks (P1-Pq) which form the digital audio signal to be recorded, and recorded in PCM format or another known audio format.
■ sampling frequency field: frequency at which each track has been sampled. In the event that the tracks are recorded in PCM format, the sampling frequency or number of samples per second is 44100 Hz.
■ bits/sample field: size, in number of bits of each sample. In PCM format, the samples of the tracks are 16 bits in size.
■ BPM field: beats per minute (BPM) of the song that the tracks form; this parameter is indicated by the music producer and it serves as help in the mixing of the tracks for reproducing the song.
■ field duration: length of the song in maximum number of samples. Said maximum length of samples limits the reproducing length; in the example, the maximum number (n) of samples is 2³² = 4,294,967,296.

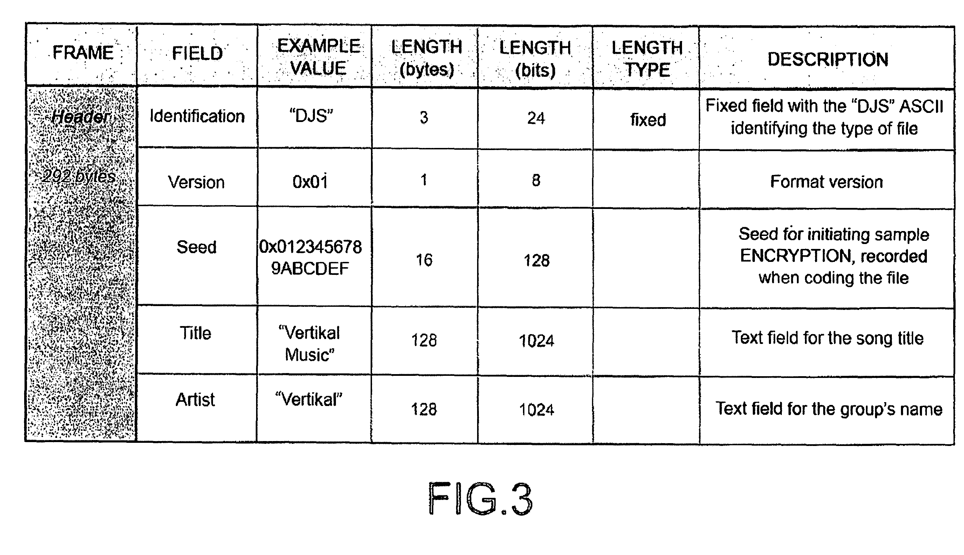

Prior to the format header (F), the recording method heads the generation of the digital audio format of the invention with a general header (C) which contains information on identification of the audio data, like that illustrated by figure 3:
■ identification field: ASCII characters which identify the type of digital audio format object of the invention.
■ version field: version number of the digital audio format object of the invention; in terms of this number, the format can include functional variations or add new functionalities in future versions.
■ seed field: key with which the format header (F) and the data field (D) will be encrypted during the recording method; preferably, for the encryption an evolutive key method is used and starting from this field, the rest of the data is encrypted.
■ title field: title of the song.
■ Artist field: the name of the singer; these last two ASCII fields are introduced by the user through a graphic interface.

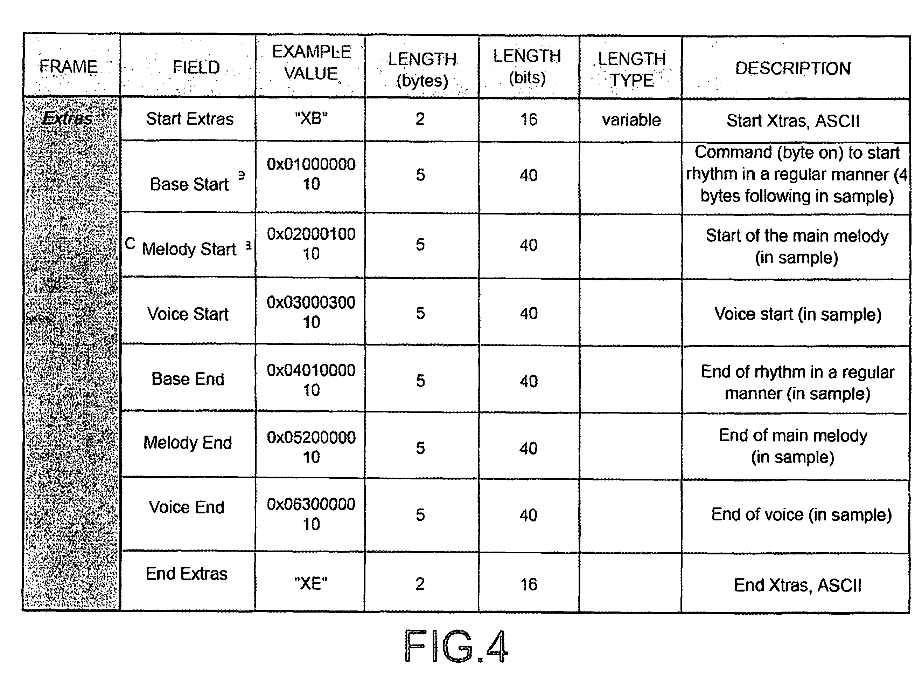

In another optional embodiment of the invention, the recording method includes an extra data field (E), formed in turn by several fields of variable length which hold commands for the automatic mixing of songs when two reproducing devices of the audio format described are in communication. An example of said fields is to be seen in figure 4, according to which the extra data field (E) is defined by two initial ASCII characters "XB" and another two final ASCII characters "XE". In the example, values are indicated of address marks with respect to the start of the audio file, when the sound of a specific track begins.

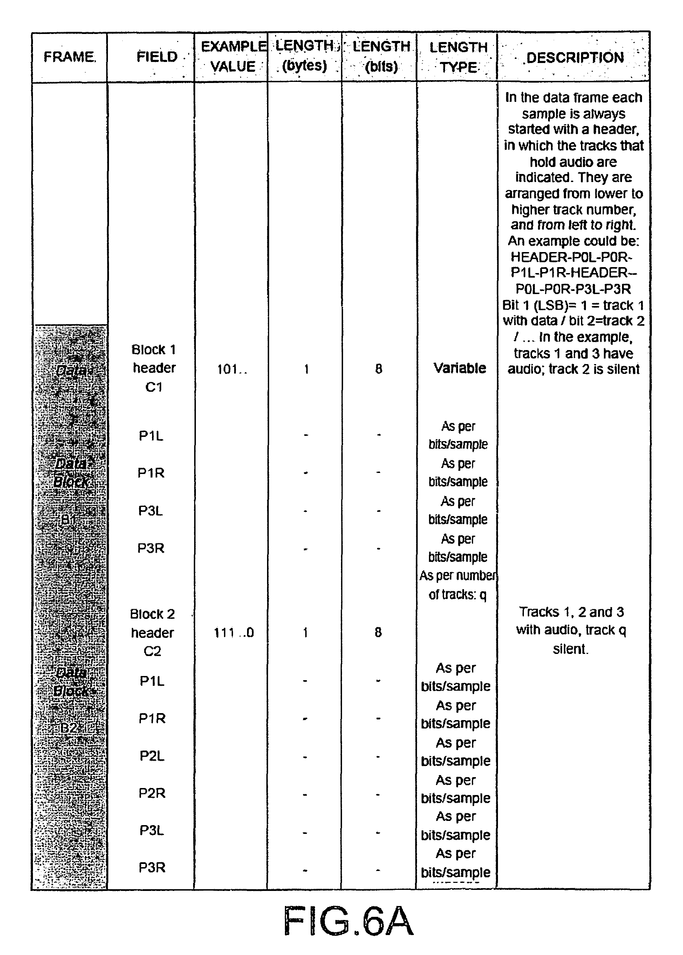

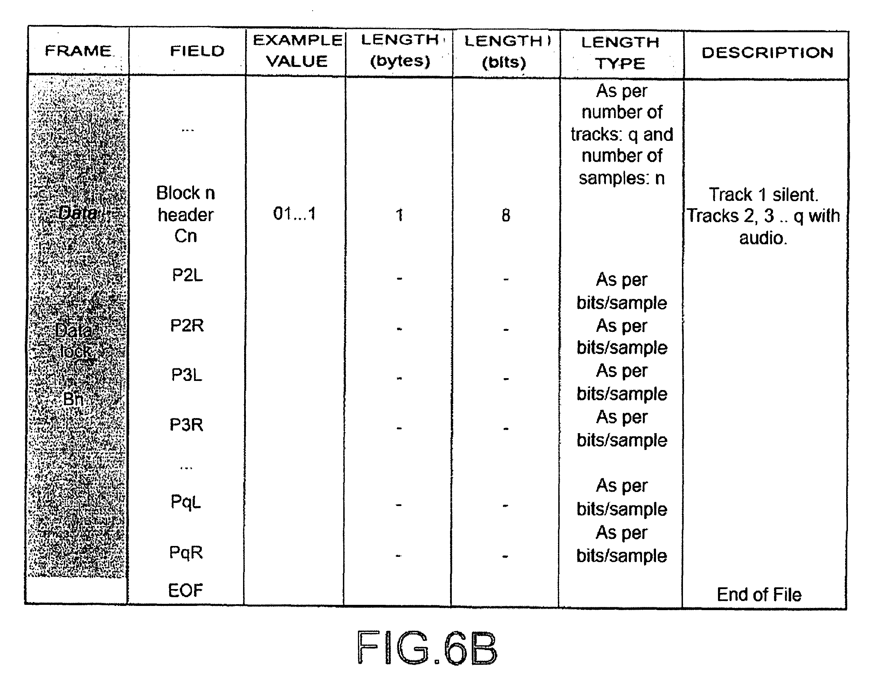

Lastly, figures 6A and 6B illustrate the data field (D) which has a variable length configuration, determined by the block headers (C1-Cn) together with the data blocks (B1-Bn). During the recording, the samples with null value do not figure in the SAMPLES sub-fields, which constitute the data blocks (B1-Bn), but they do figure in the block headers (C1-Cn) with a bit set to value "0" for the track to which the null sample corresponds, saving length in the data field. Thus, if in the block header Ci, i=1 up to i=n, a "0" appears in the bit number "j", this indicates that the sample Mi of the track Pj corresponds to a silence and it is not included in the data block Bi; if the bit number "j" is a "1", in the data block Bi the sample Mi is recorded for the track Pj. The data in each SAMPLES sub-field are arranged following the numbering of the tracks and the SAMPLES sub-fields are arranged according to the numbering of the samples. Moreover, the data in each SAMPLES sub-field are arranged in accordance with the number of channels, indicated in the stereo field of the format header (F), from left to right and from front to back in connection with the spatial position that each channel represents.

In light of this description and set of figures, an expert in the matter can understand that the embodiments of the invention which have been described can be combined in multiple ways within the object of the invention. The invention has been described according to some preferred embodiments thereof, but for an expert in the matter it will be evident that multiple variations can be introduced in said preferred embodiments without departing from the object of the claimed invention.

## Claims

1. - Method for the recording of audio data on a data support, said audio data being formed by at least one audio track (P1-Pq) in a known format and said tracks being incorporated by a defined number (n) of samples (M1-Mn) of known size, which has the object of allowing the reproduction and/or manipulation from said data support, in real time, without quality impairment and in an independent manner, of said audio tracks (P1-Pq) **characterized in that** it comprises recording a data field (D) which consists of a digitised information structure formed by data blocks (B1-Bn), as many in number as the number (n) of samples and arranged following the numbering of said samples, and each of the data blocks (B1-Bn) being formed by the grouping of all the samples (M1-Mn), which correspond to the same order number for each of the tracks (P1-Pq).

2. - Method for the recording of audio data on a data support according to claim 1 **characterized in that** the audio data consist of a digitised audio signal.

3. - Method for the recording of audio data on a data support according to any one of the previous claims **characterized in that** the known format of the audio tracks (P1-Pq) is selected from among: PCM formats without quality impairment, audio compression formats with quality impairment and audio multi-channel formats of spatial positioning.

4. - Method for the recording of audio data on a data support according to any one of the previous claims **characterized in that** in the recording of the data field (D) the recording is included of a block header (C1-Cn) for each of the data blocks (B1-Bn), which consists in a digitised information structure whose length is fixed and equal to the number (q) of tracks, which contains information on whether the tracks have samples corresponding to a silence or not.

5. - Method for the recording of audio data on a data support according to claim 4 **characterized in that** in the recording of the data field (D) the samples corresponding to silences are not written on the data support.

6. - Method for the recording of audio data on a data support according to any one of the previous claims **characterized in** the recording of a format header (F) which consists of a digitised information structure which contains information on the samples (M1-Mn) of each track (P1-Pq) and the number (n) of samples.

7. - Method for the recording of audio data on a data support according to any one of the previous claims **characterized in** the recording of a general header (C) which consists of a digitised information structure which contains identification information on the audio data.

8. - Method for the recording of audio data on a data support according to claim 7 **characterized in that** said identification information is introduced by the user by means of a graphic interface.

9. - Method for the recording of audio data on a data support according to any one of the previous claims **characterized in** the recording of an extra data field (E) which consists of a digitised information structure which contains information on the tracks (P1-Pq) for synchronization in the reproduction.

10. - Method for the recording of audio data on a data support according to any one of the previous claims **characterized in that** the samples (M1-Mn) of each track (P1-Pq) contain information of at least one channel of spatial positioning.

11. - Method for the recording of audio data on a data support according to any one of the previous claims **characterized by** encrypting the data field (D) by means of a key.

12. - Method for the recording of audio data on a data support according to claim 11 **characterized by** encryption of the format header (F) by means of said key.

13. - Method for the recording of audio data on a data support according to any one of the previous claims **characterized in that** the data support is selected from among: memory cards, optical disk, magnetic disk or magnetic tape.

14. - Data support which contains audio data **characterized in that** the data are recorded on the same according to the method of claims 1 to 13.

15. - Data support according to claim 14 **characterized in that** said support is selected from among: memory cards, optical disk, magnetic disk or magnetic tape.

16. - Method of recording, reproduction and manipulation of audio data on a data support, said audio data being formed by at least one audio track (P1-Pq) in a known format and said tracks being incorporated by a defined number (n) of samples (M1-Mn) of known size, recorded according to the method of claims 1 to 13 **characterized in that** it comprises reproduction and manipulation from said data support, in real time, without quality impairment and in an independent manner of said audio tracks (P1-Pq).

17. - Method of recording, reproduction and manipulation of audio data on a data support according to claim 16 **characterized in that** said audio tracks (P1-Pq) comprise spatial positioning channels and are reproduced from said data support, in real time, without quality impairment and in an independent manner.
